(19) Europäisches Patentamt
European Patent Office
Office européen des brevets

(11) **EP 4 621 348 A1**

(12) **EUROPEAN PATENT APPLICATION**
published in accordance with Art. 153(4) EPC

(43) Date of publication:
24.09.2025 Bulletin 2025/39

(21) Application number: 23893883.1

(22) Date of filing: 22.11.2023

(51) International Patent Classification (IPC):
*G01B 11/24* (2006.01)     *G06T 7/73* (2017.01)
*G01S 17/66* (2006.01)     *G01S 7/48* (2006.01)
*G01S 7/481* (2006.01)     *G01S 17/89* (2020.01)

(52) Cooperative Patent Classification (CPC):
G01S 7/4808; G01B 11/002; G01B 11/24;
G01S 7/4817; G01S 17/89; G06T 7/73

(86) International application number:
PCT/CN2023/133181

(87) International publication number:
WO 2024/109795 (30.05.2024 Gazette 2024/22)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 25.11.2022 CN 202211490005

(71) Applicant: Hangzhou Shining Tianyuan 3D
Inspection
Technology Co., Ltd.
Hangzhou, Zhejiang 311258 (CN)

(72) Inventors:
• LI, Zhouqiang
  Hangzhou, Zhejiang 311258 (CN)
• LI, Renju
  Hangzhou, Zhejiang 311258 (CN)
• LIANG, Baoqiu
  Hangzhou, Zhejiang 311258 (CN)
• LI, Zhongping
  Hangzhou, Zhejiang 311258 (CN)

(74) Representative: Grünecker Patent- und
Rechtsanwälte
PartG mbB
Leopoldstraße 4
80802 München (DE)

(54) **SCANNING PROCESSING METHOD AND APPARATUS, DEVICE, AND MEDIUM**

(57)     Embodiments of the disclosure relate to a method and apparatus for scanning processing, a device, and a medium. The method includes: inspecting state information of a scanning head in real time in a process of tracking and scanning a target object, and acquiring first tracker scanning measurement data based on the scanning head; performing a switch to a stitched scanning mode in a case that the state information of the scanning head satisfies a preset mode switching condition, and acquiring stitched scanning measurement data based on the scanning head in the stitched scanning mode; continuing to inspect state information of the scanning head in real time, and converting the stitched scanning measurement data into second tracker scanning measurement data in a case that the state information of the scanning head satisfies a preset data conversion condition; and obtaining target tracker scanning measurement data of the target object based on the first tracker scanning measurement data and the second tracker scanning measurement data. With the above technical solution, complete measurement of an object to be measured can be achieved without stack transfer in the presence of obstructions in the process of tracking and scanning. Thus, a cost is saved on and scanning processing efficiency is improved while scanning measurement precision is ensured.

Fig. 1

Inspect state information of a scanning head in real time in a process of tracking and scanning a target object, and acquire first tracker scanning measurement data based on the scanning head — S101

Perform a switch to a stitched scanning mode in a case that the state information of the scanning head satisfies a preset mode switching condition, and acquire stitched scanning measurement data based on the scanning head in the stitched scanning mode — S102

Continue to inspect state information of the scanning head in real time, and convert the stitched scanning measurement data into second tracker scanning measurement data in a case that the state information of the scanning head satisfies a preset data conversion condition — S103

Obtain target tracker scanning measurement data of the target object based on the first tracker scanning measurement data and the second tracker scanning measurement data — S104

## Description

The disclosure claims the priority of Chinese Patent Application No. 202211490005.8, filed with the Chinese Patent Office on November 25, 2022 and entitled "Method and apparatus for scanning processing, device, and medium", which is incorporated in its entirety herein by reference.

## Technical Field

The disclosure relates to the technical field of tracking and scanning, and in particular to a method and apparatus for scanning processing, a device, and a medium.

## Background

In the related art, a tracker tracks and locates a scanning head in real time to achieve complete measurement of appearance of an object to be measured. But in the presence of obstructions, scanning measurement of a back surface of the object to be measured is impossible through the above method. For complete measurement, stack transfer (moving the tracker to a next position) is required, and thus operations are cumbersome.

Thus, when the scanning head of a tracking and scanning device is obstructed during tracking and scanning, complete measurement cannot be achieved without stack transfer. But if stack transfer is performed, higher costs and longer time will be consumed, and scanning and measurement precision cannot be ensured.

## Summary

In order to solve or at least partially solve the above technical problems, the disclosure provides a method and apparatus for scanning processing, a device, and a medium.

A method for scanning processing is provided in embodiments of the disclosure. The method includes:

inspecting state information of a scanning head in real time in a process of tracking and scanning a target object, and acquiring first tracker scanning measurement data based on the scanning head;

performing a switch to a stitched scanning mode in a case that the state information of the scanning head satisfies a preset mode switching condition, and acquiring stitched scanning measurement data based on the scanning head in the stitched scanning mode;

continuing to inspect state information of the scanning head in real time, and converting the stitched scanning measurement data into second tracker scanning measurement data in a case that the state information of the scanning head satisfies a preset data conversion condition; and

obtaining target tracker scanning measurement data of the target object based on the first tracker scanning measurement data and the second tracker scanning measurement data.

An apparatus for scanning processing is further provided in some embodiments of the disclosure. The apparatus includes:

a real-time inspection component configured to inspect state information of a scanning head in real time in a process of tracking and scanning a target object;

a first acquisition component configured to acquire first tracker scanning measurement data based on the scanning head;

a switch component configured to perform a switch to a stitched scanning mode in a case that the state information of the scanning head satisfies a preset mode switching condition;

a second acquisition component configured to acquire stitched scanning measurement data based on the scanning head in the stitched scanning mode; where

the real-time inspection component is further configured to continue to inspect state information of the scanning head in real time; a conversion component configured to convert the stitched scanning measurement data into second tracker scanning measurement data in a case that the state information of the scanning head satisfies a preset data conversion condition; and

a processing component configured to obtain target tracker scanning measurement data of the target object based on the first tracker scanning measurement data and the second tracker scanning measurement data.

An electronic device is further provided in some embodiments of the disclosure. The electronic device includes: a processor; and a memory configured to store an instruction executable by the processor; where the processor is configured to read the executable instruction from the memory, and execute the instruction, so as to implement the method for scanning processing according to some embodiments of the disclosure.

A computer-readable storage medium is further provided in some embodiments of the disclosure. The computer-readable storage medium stores a computer program, where the computer program is configured to execute the method for scanning processing according to some embodiments of the disclosure.

Compared with the related art, the technical solution according to some embodiments of the disclosure has the advantages as follows: in the method for scanning processing according to some embodiments of the disclosure, the state information of the scanning head is inspected in real time in the process of tracking and scanning the target object, and the first tracker scanning measurement data are acquired based on the scanning head; the switch to the stitched scanning mode is performed in a case that the state information of the scanning head satisfies the preset mode switching condition, and the stitched scanning measurement data are acquired based on the scanning head in the stitched scanning mode; the state information of the scanning head continues to be inspected in real time, and the stitched scanning measurement data are converted into the second tracker scanning measurement data in a case that the state information of the scanning head satisfies the preset data conversion condition; and the target tracker scanning measurement data of the target object are obtained based on the first tracker scanning measurement data and the second tracker scanning measurement data. With the above technical solution, complete measurement of an object to be measured can be achieved without stack transfer in the presence of obstructions in the process of tracking and scanning. Thus, a cost is saved on and scanning processing efficiency is improved while scanning measurement precision is ensured.

It should be understood that the above general description and the following detailed description are merely illustrative and explanatory, and cannot limit the disclosure.

## Brief Description of the Drawings

The accompanying drawings herein are incorporated in the description as a constituent part of the description, illustrate examples conforming to the disclosure, and serve to explain the principles of the disclosure along with the description.

In order to describe the technical solutions in some embodiments of the disclosure or in the related art more clearly, the accompanying drawings required for describing the examples or the related art will be briefly described below. Apparently, those of ordinary skill in the art can also derive other accompanying drawings from these accompanying drawings without creative efforts.

Fig. 1 is a schematic flowchart of a method for scanning processing according to some embodiments of the disclosure;

Fig. 2 is a schematic flowchart of another method for scanning processing according to some embodiments of the disclosure;

Fig. 3 is a schematic structural diagram of an apparatus for scanning processing according to some embodiments of the disclosure; and

Fig. 4 is a schematic structural diagram of an electronic device according to some embodiments of the disclosure.

## Detailed Description of the Embodiments

Embodiments of the disclosure will be further described in detail below in conjunction with the accompanying drawings. Although some embodiments of the disclosure are shown in the accompanying drawings, it should be understood that the disclosure can be implemented in various forms and should not be interpreted as being limited to the examples set forth herein. On the contrary, these examples are provided for more thorough and complete understanding of the disclosure. It should be understood that the accompanying drawings and some embodiments of the disclosure are merely illustrative, and are not intended to limit the scope of protection of the disclosure.

It should be understood that various steps described in a method embodiment of the disclosure can be executed in different orders and/or in parallel. In addition, the method embodiment can include additional steps and/or will not execute the steps shown. The scope of the disclosure is not limited in this respect.

The terms "comprise", "include", and their variations used herein indicate open-ended inclusion, i.e. "comprise, but is not limited to", and "include, but is not limited to". The term "based on" means "at least partially based on". The term "an example" indicates "at least one example". The term "another example" indicates "at least one further example". The term "some examples" indicates "at least some examples". The definitions relevant to other terms are set forth in the description below.

It should be noted that the concepts "first", "second", etc. mentioned in the disclosure are merely used to distinguish between different apparatuses, components, or units, instead of defining an order or interdependence relation of functions executed by these apparatuses, components, or units.

It should be noted that the modifiers "a", "an", and "a plurality of" mentioned in the disclosure are illustrative rather than restrictive. Those skilled in the art should understand that these modifiers should be interpreted as "one or more" unless clearly indicated otherwise in the context.

The name of a message or information interacting between a plurality of apparatuses in the embodiments of the disclosure is merely descriptive, and is not intended to limit the scope of the message or information.

Alternatively, in a tracking type scanning measurement system, an object to be measured is required to be placed in an effective field of view of a tracker in a process of measurement. In a process of real-time scanning measurement, the tracker needs to detect a mark point frame connected to a scanning head in real time, so as to inspect a posture of the scanning head in real time. Thus, scanning data of each frame of the scanning head are unified into a reference coordinate system (a tracker coordinate system). In order to realize complete scanning measurement of a large-size object to be measured, a reflective mark point needs to be pasted on the object to be measured, and the tracker pre-photographs frame information of the mark point pasted on the object to be measured. When the tracker needs to be moved, a stack transfer operation is performed to unify coordinate systems onto frame coordinates of the mark point on the object to be measured, so that complete measurement of a large-size workpiece is realized.

However, when the complete measurement of the large-size workpiece is required, the tracker needs to pre-photograph a frame point of a mark point on a surface of the object to be measured. During frame photographing, the tracker needs to be manually moved to different positions and postures, and the frame needs to be photographed sufficiently to ensure stability and precision of the frame. Tracking and scanning may not be continued because it is impossible to move the tracker to some corresponding positions with narrow space.

In a method for scanning processing according to some embodiments of the disclosure, location information tracked and self-location information of the scanning head are automatically stitched in a common area, so that two data can be automatically stitched under a coordinate system in real time. Thus, complete measurement of the object to be measured can be achieved without stack transfer in the presence of obstructions in the process of tracking and scanning. Accordingly, a cost is saved on and scanning processing efficiency is improved while scanning measurement precision is ensured.

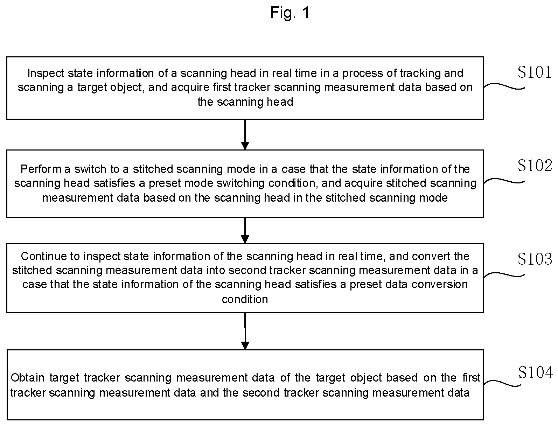

Fig. 1 is a schematic flowchart of a method for scanning processing according to some embodiments of the disclosure. The method may be executed by an apparatus for scanning processing. The apparatus may be implemented through software and/or hardware, and typically integrated in an electronic device. As shown in Fig. 1, the method includes:

Step 101, state information of a scanning head is inspected in real time in a process of tracking and scanning a target object, and first tracker scanning measurement data are acquired based on the scanning head.

The target object may be any object to be scanned, for example, a large-size workpiece. Tracking and scanning indicate that the tracker tracks and locates the scanning head in real time, so as to achieve complete measurement of appearance of the target object. Thus, three-dimensional point clouds inspected by the scanning head in real time are unified to a reference coordinate system (a tracker coordinate system), so as to obtain a complete point cloud of the target object. The state information of the scanning head indicates whether the tracker can detect the scanning head, in other words, whether the scanning head is obstructed.

In some embodiments of the disclosure, after a tracker scanning system is calibrated, tracking and scanning on the target object is started. The step that state information of a scanning head is inspected in real time in a process of tracking and scanning a target object can be understood as inspecting whether the tracker can detect the scanning head or whether the scanning head is obstructed in real time.

In some embodiments of the disclosure, a number of methods can be used to acquire the first tracker scanning measurement data based on the scanning head in the process of tracking and scanning the target object. In some embodiments, current first scanning measurement data at a current position are acquired based on the scanning head; a first rotation matrix and a first translation vector for conversion from a scanning head coordinate system to a tracker coordinate system are acquired; and calculation is performed based on the current first scanning measurement data, the first rotation matrix, and the first translation vector, so as to obtain the first tracker scanning measurement data. In some other embodiments, real-time scanning measurement data are acquired based on the scanning head in real time, and the real-time scanning measurement data are processed based on a data processing algorithm, so as to obtain the first tracker scanning measurement data.

The above two methods are merely instances of acquiring the first tracker scanning measurement data based on the scanning head. The specific implementation of acquiring the first tracker scanning measurement data based on the scanning head is not limited in some embodiments of the disclosure.

Step 102, a switch to a stitched scanning mode is performed in a case that the state information of the scanning head satisfies a preset mode switching condition, and stitched scanning measurement data are acquired based on the scanning head in the stitched scanning mode.

The mode switching condition is preset, and the mode switching condition includes that the tracker detects no scanning head or the scanning head is obstructed. The stitched scanning mode indicates that a reflective mark point is pasted on the target object, and real-time scanned three-dimensional data are unified into the reference coordinate system (the tracker coordinate system) by the scanning head through frame-by-frame stitching, so as to achieve complete measurement of the appearance of the target object.

In some embodiments of the disclosure, the step that a switch to a stitched scanning mode is performed in a case that the state information of the scanning head satisfies a preset mode switching condition includes it is determined that the tracker detects no scanning head based on the state information of the scanning head, and the switch to the stitched scanning mode is performed in a case of determining that the state information of the scanning head satisfies the preset mode switching condition.

In some embodiments of the disclosure, the stitched scanning measurement data are acquired based on the scanning head in a case of the switch to the stitched scanning mode. In an embodiment, current second scanning measurement data at the current position are acquired based on the scanning head; a second rotation matrix and a second translation vector of the scanning head for conversion from a current position coordinate system to an initial position coordinate system of the scanning head; and calculation is performed based on the current second scanning measurement data, the second rotation matrix, and the second translation vector, so as to obtain the stitched scanning measurement data. In some other embodiments, real-time scanned measurement data are acquired based on the scanning head in real time, and the real-time scanned measurement data are processed based on a preset data conversion formula, so as to obtain the stitched scanning measurement data.

The above two methods are merely instances of acquiring the stitched scanning measurement data based on the scanning head. The specific implementation of acquiring the stitched scanning measurement data based on the scanning head is not limited in some embodiments of the disclosure.

Step 103, state information of the scanning head continues to be inspected in real time, and the stitched scanning measurement data are converted into second tracker scanning measurement data in a case that the state information of the scanning head satisfies a preset data conversion condition.

The data conversion condition is preset, and the data conversion condition includes that the tracker detects the scanning head or the scanning head is not obstructed.

In some embodiments of the disclosure, after the switch to the stitched scanning mode is performed, it is determined that the tracker detects the scanning head on the basis of continuing to inspect the state information of the scanning head in real time, and it is determined that the state information of the scanning head satisfies the preset data conversion condition.

Further, the stitched scanning measurement data are converted into the second tracker scanning measurement data. In some embodiments, a third rotation matrix and a third translation vector of the scanning head for conversion from the initial position coordinate system to the tracker coordinate system are acquired, and calculation is performed based on the stitched scanning measurement data, the third rotation matrix, and the third translation vector, so as to obtain the second tracker scanning measurement data. In some other embodiments, the stitched scanning measurement data are processed based on the preset data conversion formula, so as to obtain the second tracker scanning measurement data.

The above two methods are merely instances of converting the stitched scanning measurement data into the second tracker scanning measurement data. The specific implementation of converting the stitched scanning measurement data into the second tracker scanning measurement data is not limited in some embodiments of the disclosure.

Step 104, target tracker scanning measurement data of the target object are obtained based on the first tracker scanning measurement data and the second tracker scanning measurement data.

Alternatively, in the process of scanning measurement, according to whether the tracker can detect the scanning head, a tracking and scanning mode or a stitched scanning mode is employed. The first tracker scanning measurement data acquired in the tracking and scanning mode, and the second tracker scanning measurement data acquired by unifying the stitched scanning measurement data into the tracker coordinate system in the stitched scanning mode are merged and stored as the target tracker scanning measurement data of the target object.

In the solution for scanning processing according to some embodiments of the disclosure, the state information of the scanning head is inspected in real time in the process of tracking and scanning the target object, and the first tracker scanning measurement data are acquire based on the scanning head. The switch to the stitched scanning mode is performed in a case that the state information of the scanning head satisfies the preset mode switching condition. The stitched scanning measurement data are acquired based on the scanning head in the stitched scanning mode. The state information of the scanning head continues to be inspected in real time, and the stitched scanning measurement data are converted into the second tracker scanning measurement data in a case that the state information of the scanning head satisfies the preset data conversion condition. The target tracker scanning measurement data of the target object are obtained based on the first tracker scanning measurement data and the second tracker scanning measurement data. With the above technical solution, complete measurement of the object to be measured can be achieved without stack transfer in the presence of obstructions in the process of tracking and scanning. Thus, a cost is saved on and scanning processing efficiency is improved while scanning measurement precision is ensured.

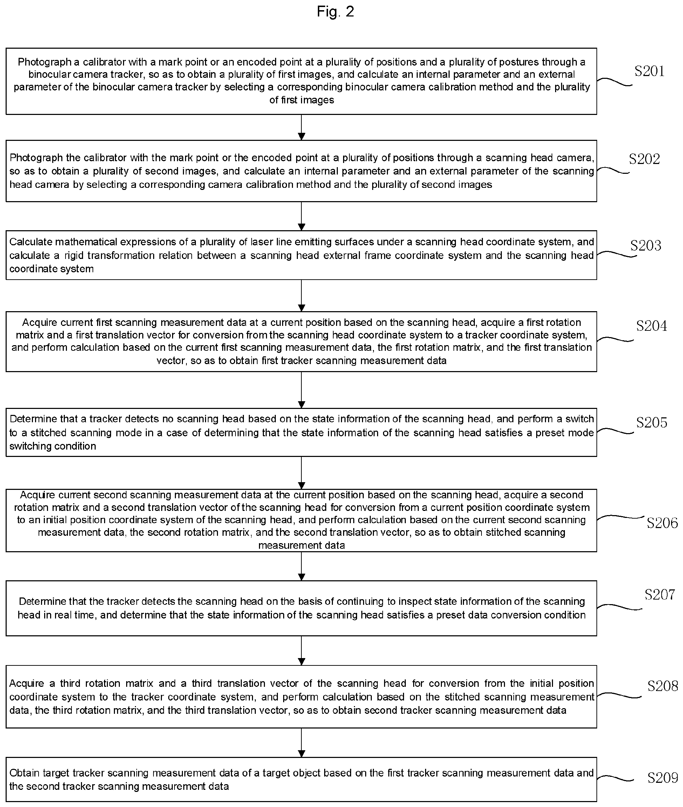

Fig. 2 is a schematic flowchart of another method for scanning processing according to some embodiments of the disclosure. Based on the above example, the above method for scanning process is further optimized in the example. As shown in Fig. 2, the method includes:
Step 201, a calibrator with a mark point or an encoded point is photographed at a plurality of positions and a plurality of postures through a binocular camera tracker, so as to obtain a plurality of first images, and an internal parameter and an external parameter of the binocular camera tracker are calculated by selecting a corresponding binocular camera calibration method and the plurality of first images.

Alternatively, calibration of the binocular camera tracker is mainly to calibrate the internal parameter and the external parameter of the binocular camera tracker. Calibration parameters mainly include the internal parameters $K_i$ (i= 0, 1, 2) of the binocular camera tracker and the external parameter $R_i t_i$, (i=0,1,2) of the camera. Alternatively, the calibrator (a standard instrument with a mark point or an encoded point) is photographed at the plurality of positions and the plurality of postures, so as to obtain the plurality of first images. The internal parameter and the external parameter of the binocular camera tracker are calculated by selecting the corresponding binocular camera tracker calibration method.

Step 202, the calibrator with the mark point or the encoded point is photographed at a plurality of positions through a scanning head camera, so as to obtain a plurality of second images, and an internal parameter and an external parameter of the scanning head camera are calculated by selecting a corresponding camera calibration method and the plurality of second images.

Step 203, mathematical expressions of a plurality of laser line emitting surfaces under the scanning head coordinate system are calculated; and a rigid transformation relation between an external frame coordinate system of the scanning head and the scanning head coordinate system is calculated.

Alternatively, calibration of a scanning head system mainly includes calibration of the internal parameter and the external parameter of the scanning head camera, and calibration of scanning head laser lines. The calibration of the internal parameter and the external parameter of the scanning head camera may be performed by photographing the calibrator at the plurality of positions, so as to obtain the plurality of second images, and calculating the internal parameter and the external parameter of the scanning head camera by selecting the corresponding camera calibration method and the plurality of second images.

Alternatively, the calibration of the scanning head laser lines is to calculate the mathematical expressions of the plurality of laser line emitting surfaces under the scanning head coordinate system. In other words, mathematical expressions of laser surfaces may be denoted by a plane equation and a quadric surface equation according to features of the laser surfaces. The plane equation is shown in a formula (1), and the quadric surface equation is shown in a formula (2):

$$ax+by+cz+d=0 \quad (1)$$

$$Ax^2+By^2+Cz^2+Dxy+Exz+Fyz+Gx+Hy+Iz+J=0 \quad (2)$$

In the formulas, a, b, c, and d denote plane equation parameters, (x, y, z) denote three-dimensional point coordinates, and A, B, C, D, E, F, G, H, I, and J denote quadric surface equation parameters.

Alternatively, the calculation of the rigid transformation relation between the external frame coordinate system of the scanning head and the scanning head coordinate system is to achieve hand-eye calibration, i.e. calculate a transformation relation between the scanning head coordinate system $P_{scan}$ and the external connection frame coordinate system $P_{Frame}$, as shown in a formula (3):

$$P_{scan}=R*P_{Frame}+t \quad (3).$$

In the formula, $P_{scan}$ denotes a coordinate of a point cloud under the scanning head coordinate system, $P_{Frame}$ denotes a coordinate of the point cloud under the frame coordinate system, and R and t denote a rotation matrix and a translation vector for conversion from the frame coordinate system to the scanning head coordinate system respectively.

It can be understood that the execution sequence of steps 201-203 can be selected and set according to application scenario demand.

Step 204, current first scanning measurement data at a current position are acquired based on the scanning head; a first rotation matrix and a first translation vector for conversion from a scanning head coordinate system to a tracker coordinate system are acquired; and calculation is performed based on the current first scanning measurement data, the first rotation matrix, and the first translation vector, so as to obtain first tracker scanning measurement data.

Alternatively, in the tracking and scanning mode, the binocular camera tracker inspects a posture of the scanning head. Mark points detected by two cameras in the binocular camera tracker are valid mark points. At least three valid mark points are provided. A position relation between the scanning head coordinate system and the tracker coordinate system may be calculated through the mark points, as shown in a formula (4):

$$P_{Tracker}=R_{Fs}*P_{scan}+t_{Fs} \qquad (4)$$

In the formula, $P_{Tracker}$ denotes a coordinate of scanning measurement data (a point cloud) under the tracker coordinate system, and $R_{Fs}$ and $t_{FS}$ denote the first rotation matrix and the first translation vector for conversion from the scanning head coordinate system to the tracker coordinate system respectively.

Alternatively, the scanning head is configured for structural light measurement. The scanning measurement data at the current position are calculated after calibration of the scanning head is completed. The posture acquired of the scanning head is converted into the tracker coordinate system according to the formula (4), so as to obtain the first tracker scanning measurement data.

Step 205, it is determined that a tracker detects no scanning head based on the state information of the scanning head, and a switch to a stitched scanning mode is performed in a case of determining that the state information of the scanning head satisfies a preset mode switching condition.

Step 206, current second scanning measurement data at the current position are acquired based on the scanning head; a second rotation matrix and a second translation vector of the scanning head for conversion from a current position coordinate system to an initial position coordinate system of the scanning head are acquired; and calculation is performed based on the current second scanning measurement data, the second rotation matrix, and the second translation vector, so as to obtain the stitched scanning measurement data.

Alternatively, in a case that the tracker detects no scanning head, the switch to the stitched scanning mode is performed. Posture inspection of a current scanning head relative to an initial position is determined based on the mark points in the stitched scanning mode. Generally, the calculation is realized with at least three pairs of matched points. It can be understood that unknown data in a rigid transformation formula can be calculated through at least three pairs of matched points serving as known data. The rigid transformation formula is shown in a formula (5):

$$P_{Init}=R_{Scan\_i}*P_{Scan\_i}+t_{Scan\_i} \qquad (5)$$

In the formula, $P_{Init}$ denotes the initial position coordinate system of the scanning head, $P_{Scan\_i}$ **denotes** a coordinate system of the scanning head at a position i, and $R_{Scan\_i}$ and $t_{Scan\_i}$ denote the second rotation matrix and the second translation vector for conversion from the coordinate system of the scanning head coordinate system at the position i to the initial position coordinate system of the scanning head.

Alternatively, the scanning head is configured for structural light measurement. The scanning measurement data at the current position are calculated after the calibration of the scanning head is completed, and are converted into the initial coordinate system in the stitched scanning mode according to the formula (5).

Step 207, it is determined that the tracker detects the scanning head on the basis of continuing to inspect the state information of the scanning head in real time, and it is determined that the state information of the scanning head satisfies the preset data conversion condition.

Step 208, a third rotation matrix and a third translation vector of the scanning head for conversion from the initial position coordinate system to the tracker coordinate system are acquired; and calculation is performed based on the stitched scanning measurement data, the third rotation matrix, and the third translation vector, so as to obtain second tracker scanning measurement data.

Alternatively, point cloud data measured by the scanning head in the stitched scanning mode are transferred to the tracker coordinate system. In other words, the measurement data stitched based on the mark points are transferred into the tracker coordinate system, as shown in a formula (6):

$$P_{Tracker}=R_i*P_{Init\_i}+t_{Init\_i} \qquad (6)$$

In the formula, $P_{Init\_i}$ denotes the initial position coordinate system of the scanning head in an ith scanning stitching mode, $P_{scan\_i}$ denotes the coordinate system of the scanning head at the position i, and $R_i$ and $t_{Init\_i}$ denote the third rotation matrix and the third translation vector of the scanning head in the ith scanning stitching mode for conversion from the initial position coordinate system to the tracker coordinate system respectively.

Step 209, target tracker scanning measurement data of the target object are obtained based on the first tracker scanning measurement data and the second tracker scanning measurement data.

Alternatively, in the process of scanning measurement, according to whether the tracker can detect the scanning head, a tracking and scanning mode or a stitched scanning mode is employed. The first tracker scanning measurement data acquired in the tracking and scanning mode, and the second tracker scanning measurement data acquired by unifying the stitched scanning measurement data into the tracker coordinate system in the stitched scanning mode are merged and stored as the target tracker scanning measurement data of the target object.

It should be noted that in order to further improve the target tracker scanning measurement data, point cloud optimization, gridding, etc. may be performed on the target tracker scanning measurement data.

Thus, location information tracked and self-location information of the scanner can be automatically stitched in a common area, so that two data can be automatically stitched into one coordinate system in real time. Thus, a stitched scanning area is controlled while a problem of obstructions in the process of tracking and scanning is effectively solved, and a number of stack transfer is reduced or no stack transfer is required, so that the scanning measurement precision is ensured, and manpower and material resources are saved on.

In the solution for scanning processing according to some embodiments of the disclosure, the calibrator with the mark point or the encoded point is photographed at the plurality of positions and the plurality of postures through the binocular camera tracker, so as to obtain the plurality of first images, and the internal parameter and the external parameter of the binocular camera tracker are calculated by selecting the corresponding binocular camera calibration method and the plurality of first images. The calibrator with the mark point or the encoded point is photographed at the plurality of positions through the scanning head camera, so as to obtain the plurality of second images, and the internal parameter and the external parameter of the scanning head camera are calculated by selecting the corresponding camera calibration method and the plurality of second images. The mathematical expressions of the plurality of laser line emitting surfaces under the scanning head coordinate system are calculated. The rigid transformation relation between the external frame coordinate system of the scanning head and the scanning head coordinate system is calculated. The current first scanning measurement data at the current position are acquired based on the scanning head. The first rotation matrix and the first translation vector for conversion from the scanning head coordinate system to the tracker coordinate system are acquired. The calculation is performed based on the current first scanning measurement data, the first rotation matrix, and the first translation vector, so as to obtain the first tracker scanning measurement data. It is determined that the tracker detects no scanning head based on the state information of the scanning head, and the switch to the stitched scanning mode is performed in a case of determining that the state information of the scanning head satisfies the preset mode switching condition. The current second scanning measurement data at the current position are acquired based on the scanning head. The second rotation matrix and the second translation vector of the scanning head for conversion from the current position coordinate system to the initial position coordinate system of the scanning head are acquired. The calculation is performed based on the current second scanning measurement data, the second rotation matrix, and the second translation vector, so as to obtain the stitched scanning measurement data. It is determined that the tracker detects the scanning head on the basis of continuing to inspect the state information of the scanning head in real time, and it is determined that the state information of the scanning head satisfies the preset data conversion condition. The third rotation matrix and the third translation vector of the scanning head for conversion from the initial position coordinate system to the tracker coordinate system are acquired. The calculation is performed based on the stitched scanning measurement data, the third rotation matrix, and the third translation vector, so as to obtain second tracker scanning measurement data. The target tracker scanning measurement data of the target object are obtained based on the first tracker scanning measurement data and the second tracker scanning measurement data. With the above technical solution, location information tracked and self-location information of the scanning head are automatically stitched in a common area, so that two tracker scanning measurement data can be automatically stitched under one coordinate system in real time. Thus, complete measurement of the object to be measured can be achieved without stack transfer in the presence of obstructions in the process of tracking and scanning. Accordingly, a cost is saved on and scanning processing efficiency is improved while scanning measurement precision is ensured.

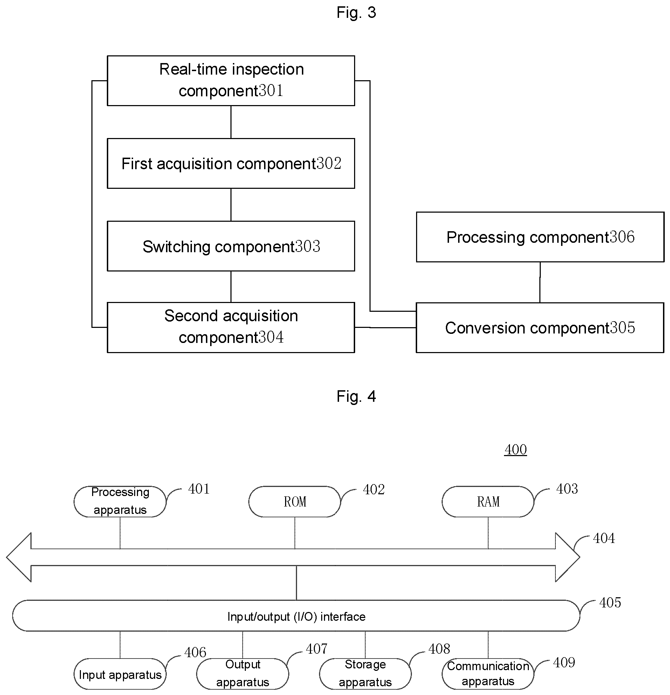

Fig. 3 is a schematic structural diagram of an apparatus for scanning processing according to some embodiments of the disclosure. The apparatus may be implemented through software and/or hardware, and typically integrated in an electronic device. As shown in Fig. 3, the apparatus includes:

a real-time inspection component 301 configured to inspect state information of a scanning head in real time in a process of tracking and scanning a target object;

a first acquisition component 302 configured to acquire first tracker scanning measurement data based on the scanning head;

a switch component 303 configured to perform a switch to a stitched scanning mode in a case that the state information of the scanning head satisfies a preset mode switching condition;

a second acquisition component 304 configured to acquire stitched scanning measurement data based on the scanning head in the stitched scanning mode; where

the real-time inspection component 301 is further configured to continue to inspect state information of the scanning head in real time;

a conversion component 305 configured to convert the stitched scanning measurement data into second tracker scanning measurement data in a case that the state information of the scanning head satisfies a preset data conversion condition; and

a processing component 306 configured to obtain target tracker scanning measurement data of the target object based on the first tracker scanning measurement data and the second tracker scanning measurement data.

Alternatively, the first acquisition component 302 is Alternatively configured to:

acquire current first scanning measurement data at a current position based on the scanning head;

acquire a first rotation matrix and a first translation vector for conversion from a scanning head coordinate system to a tracker coordinate system; and

perform calculation based on the current first scanning measurement data, the first rotation matrix, and the first translation vector, so as to obtain the first tracker scanning measurement data.

Alternatively, the second acquisition component 304 is alternatively configured to:

acquire current second scanning measurement data at the current position based on the scanning head;

acquire a second rotation matrix and a second translation vector of the scanning head for conversion from a current position coordinate system to an initial position coordinate system of the scanning head; and

perform calculation based on the current second scanning measurement data, the second rotation matrix, and the second translation vector, so as to obtain the stitched scanning measurement data.

Alternatively, the conversion component 305 is alternatively configured to:

acquire a third rotation matrix and a third translation vector of the scanning head for conversion from the initial position coordinate system to the tracker coordinate system; and

perform calculation based on the stitched scanning measurement data, the third rotation matrix, and the third translation vector, so as to obtain the second tracker scanning measurement data.

Alternatively, the conversion component 303 is alternatively configured to:
determine that a tracker detects no scanning head based on the state information of the scanning head, and perform the switch to the stitched scanning mode in a case of determining that the state information of the scanning head satisfies the preset mode switching condition.
Alternatively, the conversion component 305 is alternatively configured to:
determine that the tracker detects the scanning head on the basis of continuing to inspect state information of the scanning head in real time, and determine that the state information of the scanning head satisfies the preset data conversion condition.
Alternatively, the apparatus further includes: a calibration component configured to:

photograph a calibrator with a mark point or an encoded point at a plurality of positions and a plurality of postures through a binocular camera tracker, so as to obtain a plurality of first images, and calculate an internal parameter and an external parameter of the binocular camera tracker by selecting a corresponding binocular camera calibration method and the plurality of first images;

photograph the calibrator with the mark point or the encoded point at a plurality of positions through a scanning head camera, so as to obtain a plurality of second images, and calculate an internal parameter and an external parameter of the scanning head camera by selecting a corresponding camera calibration method and the plurality of second images;

calculate mathematical expressions of a plurality of laser line emitting surfaces under the scanning head coordinate system; and

calculate a rigid transformation relation between a scanning head external frame coordinate system and the scanning head coordinate system.

The apparatus for scanning processing according to some embodiments of the disclosure can execute the method for scanning processing according to any example of the disclosure, and has the corresponding function components and beneficial effects of executing the method.

A computer program product is further provided in some embodiments of the disclosure. The computer program product includes a computer program/instruction, where the computer program/instruction implements the method for scanning processing according to any example of the disclosure when executed by a processor.

Fig. 4 is a schematic structural diagram of an electronic device according to some embodiments of the disclosure. Alternatively, with reference to Fig. 4 below, the schematic structural diagram of the electronic device 400 suitable for implementing some embodiments of the disclosure is shown. The electronic device 400 in some embodiments of the disclosure can include, but is not limited to, a mobile terminal such as a mobile phone, a notebook computer, a digital broadcast receiver, a personal digital assistant (PDA), a pad, a portable multimedia player (PMP), and an in-vehicle terminal (for example, an in-vehicle navigation terminal), and a fixed terminal such as a digital television (TV) and a desktop computer. The electronic device shown in Fig. 4 is merely illustrative, and should not limit functions and use scope in some embodiments of the disclosure in any way.

As shown in Fig. 4, the electronic device 400 can include a processing apparatus 401 (for example, a central processing unit and a graphic processor) that can execute various suitable actions and processing according to a program stored in a read-only memory (ROM) 402 or loaded into a random access memory (RAM) 403 from a storage apparatus 408. The RAM 403 can also store various programs and data required for an operation of the electronic device 400. The processing apparatus 401, the ROM 402, and the RAM 403 are connected to one another through a bus 404. An input/output (I/O) interface 405 is also connected to the bus 404.

Alternatively, the I/O interface 405 can be connected to the following apparatuses: an input apparatus 406 such as a touch screen, a touch pad, a keyboard, a mouse, a camera, a microphone, an accelerometer, and a gyroscope; an output apparatus 407 such as a liquid crystal display (LCD), a speaker, and a vibrator; a storage apparatus 408 such as a magnetic tape and a hard disk; and a communication apparatus 409. The communication apparatus 409 can allow wireless or wired communication between the electronic device 400 and other devices for data exchange. Although Fig. 4 shows the electronic device 400 having various apparatuses, it should be understood that not all the apparatuses shown are required to be implemented or configured. More or fewer apparatuses can be implemented or configured alternatively.

Alternatively, the processes described above with reference to the flowcharts can be implemented as computer software programs according to some embodiments of the disclosure. For example, a computer program product is included in some embodiments of the disclosure. The computer program product includes a computer program carried on a non-transitory computer-readable medium and encompassing a program code configured to execute the method shown in the flowchart. In such an example, the computer program can be downloaded and installed over a network through the communication apparatus 409, installed via the storage apparatus 408, or installed via the ROM 402. The computer program executes the above functions defined in the method for scanning processing according to some embodiments of the disclosure when executed by the processing apparatus 401.

It should be noted that the above computer-readable medium of the disclosure can be a computer-readable signal medium, a computer-readable storage medium, or any combinations of the above. The computer-readable storage medium can include, but is not limited to, an electronic, magnetic, optical, electromagnetic, infrared, or semiconductor system, apparatus, or device, or any combinations of the above. More specific instances of the computer-readable storage medium can include, but are not limited to, a portable computer magnetic disk, a hard disk, a random access memory (RAM), a read-only memory (ROM), an erasable programmable read-only memory (EPROM) or a flash memory, an optical fiber, a portable compact disk read-only memory (CD-ROM), an optical storage device, and a magnetic storage device that are each electrically connected through one or more wires, or any suitable combinations of the above. In the disclosure, the computer-readable storage medium can be any tangible medium that encompasses or stores a program. The program can be used by or in combination with an instruction execution system, apparatus, or device. In the disclosure, however, the computer-readable signal medium can include a data signal propagated in a baseband or as part of a carrier wave, having a computer-readable program code carried thereon. Such a propagated data signal can take various forms including, but not limited to, an electromagnetic signal, an optical signal, or any suitable combinations of the above. The computer-readable signal medium or can be any computer-readable medium except for the computer-readable storage medium. The computer-readable signal medium can transmit, propagate, or transfer a program to be used by or in combination with the instruction execution system, apparatus, or device. The program codes encompassed in the computer-readable medium can be transmitted via any suitable medium, including, but not limited to, a wire, an optical cable, a radio frequency (RF), etc., or any suitable combinations of the above.

In some embodiments, clients and servers can communicate with each other via any currently known network protocol (such as a hypertext transfer protocol (HTTP)) or any network protocol to be developed in the future, and can be interconnected to digital data communication (for example, a communication network) in any form or medium. Instances of the communication network include a local area network ("LAN"), a wide area network ("WAN"), the Internet, a peer-to-peer network (for example, an ad hoc peer-to-peer network), any currently known network, or any network to be developed in the future.

The above computer-readable medium can be encompassed in the above electronic device, or exist alone without being assembled into the electronic device.

The above computer-readable medium carries one or more programs. When executed by the electronic device, the above one or more programs cause the electronic device to inspect state information of a scanning head in real time in a process of tracking and scanning a target object, and acquire first tracker scanning measurement data based on the scanning head; perform a switch to a stitched scanning mode in a case that the state information of the scanning head satisfies a preset mode switching condition, and acquire stitched scanning measurement data based on the scanning head in the stitched scanning mode; continue to inspect state information of the scanning head in real time, and convert the stitched scanning measurement data into second tracker scanning measurement data in a case that the state information of the scanning head satisfies a preset data conversion condition; and obtain target tracker scanning measurement data of the target object based on the first tracker scanning measurement data and the second tracker scanning measurement data.

The computer program code configured to execute operations of the disclosure can be written in one or more programming languages or their combinations. The above programming languages include, but are not limited to, object-oriented programming languages, such as Java, Smalltalk, and C++, and conventional procedural programming languages, such as "C" language. The program code can be executed on a user's computer in all or in part, executed as an independent software package, executed on a user's computer and a remote computer both in part, or executed on a remote computer or a server in all. In a case involving the remote computer, the remote computer can be connected to the user's computer via any kind of network, including the local area network (LAN) or the wide area network (WAN), or can be connected to an external computer (for example, via the Internet on the basis of an Internet service provider).

The flowcharts and block diagrams in the accompanying drawings illustrate possibly-implementable system architectures, functions, and operations of the systems, methods, and computer program products according to various embodiments of the disclosure. In this regard, each block in the flowcharts or the block diagrams can indicate a component, a program segment, or a code segment, which encompasses one or more executable instructions configured to implement specified logic functions. It should also be noted that in some alternative implementations, the functions noted in the blocks can also occur in an order other than those noted in the accompanying drawings. For example, two blocks represented in succession can in fact be executed substantially in parallel or in a reverse order sometimes, depending on the functions involved. It should also be noted that each block in the block diagrams and/or the flowcharts and combinations of blocks in the block diagrams and/or the flowcharts can be implemented through specific hardware-based systems that execute the specified functions or operations, or combinations of specific hardware and computer instructions.

The units involved in some embodiments of the disclosure can be implemented through software or hardware. The name of the unit is not intended to define of the unit itself under certain circumstances.

At least part of the above functions can be executed by one or more hardware logic components herein.

For example, non-restrictively, illustrative types of usable hardware logic components include: a field programmable gate array (FPGA), an application specific integrated circuit (ASIC), an application specific standard product (ASSP), a system on chip (SOC), a complex programmable logic device (CPLD), etc.

In the context of the disclosure, a machine-readable medium can be a tangible medium that can encompass or store a program to be used by or in combination with the instruction execution system, apparatus, or device. The machine-readable medium can be a machine-readable signal medium or a machine-readable storage medium. The machine-readable medium can include, but is not limited to, an electronic, magnetic, optical, electromagnetic, infrared, or semiconductor system, apparatus, or device, or any suitable combinations of the above. More specific instances of the machine-readable storage media include a portable computer disk, a hard disk, a random access memory (RAM), a read-only memory (ROM), an erasable programmable read-only memory (EPROM) or a flash memory, an optical fiber, a portable compact disk read-only memory (CD-ROM), an optical storage device, and a magnetic storage device that are each electrically connected through one or more wires, or any suitable combinations of the above.

According to one or more embodiments of the disclosure, the disclosure provides an electronic device. The electronic device includes:

a processor; and

a memory configured to store an instruction executable by the processor; where

the processor is configured to read the executable instruction from the memory, and execute the instruction, so as to implement any method for scanning processing provided by the disclosure.

According to one or more embodiments of the disclosure, the disclosure provides a computer-readable storage medium. The computer-readable storage medium stores a computer program, where the computer program is configured to execute any method for scanning processing provided by the disclosure.

What are described above are merely preferred embodiments of the disclosure and descriptions of the technical principles applied. It should be understood by those skilled in the art that the scope of disclosure involved in the disclosure is not limited to the technical solutions formed by specific combinations of the above technical features, and should also cover other technical solutions formed by random combinations of the above technical features or their equivalents without departing from the concept disclosed above. For example, other technical solutions include those formed through mutual replacement between the above features and the technical features having similar functions and disclosed in (but not limited to) the disclosure.

In addition, all the operations are depicted in a specific order. However, it should not be understood that these operations are required to be executed in the specific order shown or in a successive order. Under certain circumstances, multitasking and parallel processing may be advantageous. Similarly, several specific implementation details are encompassed in the above discussion, but should not be interpreted as limiting the scope of the disclosure. Some features that are described in the context of the separate examples can also be implemented in the single example jointly. Likewise, various features that are described in the context of the single example can also be implemented in a plurality of examples separately or in any suitable sub-combination manner.

Although the subject has been described in a language specific to structural features and/or logic actions of the method, it should be understood that the subject defined in the appended claims is not necessarily limited to the above specific features or actions. Rather, the above specific features and actions are merely illustrative forms for implementing the claims.

Industrial Applicability

According to the method for scanning processing provided by the disclosure, complete measurement of an object to be measured can be achieved without stack transfer in the presence of obstructions in a process of tracking and scanning. Thus, a cost is saved on and scanning processing efficiency is improved while scanning measurement precision is ensured.

**Claims**

1. A method for scanning processing, comprising:

    inspecting state information of a scanning head in real time in a process of tracking and scanning a target object, and acquiring first tracker scanning measurement data based on the scanning head;
    performing a switch to a stitched scanning mode in a case that the state information of the scanning head satisfies a preset mode switching condition, and acquiring stitched scanning measurement data based on the scanning head in the stitched scanning mode;
    continuing to inspect state information of the scanning head in real time, and converting the stitched scanning measurement data into second tracker scanning measurement data in a case that the state information of the scanning head satisfies a preset data conversion condition; and
    obtaining target tracker scanning measurement data of the target object based on the first tracker scanning measurement data and the second tracker scanning measurement data.

2. The method for scanning processing as claimed in claim 1, wherein the acquiring first tracker scanning measurement data based on the scanning head comprises:

acquiring current first scanning measurement data at a current position based on the scanning head;
acquiring a first rotation matrix and a first translation vector for conversion from a scanning head coordinate system to a tracker coordinate system; and
performing calculation based on the current first scanning measurement data, the first rotation matrix, and the first translation vector, to obtain the first tracker scanning measurement data.

3. The method for scanning processing as claimed in claim 1 or 2, wherein the acquiring stitched scanning measurement data based on the scanning head comprises:

acquiring current second scanning measurement data at the current position based on the scanning head;
acquiring a second rotation matrix and a second translation vector of the scanning head for conversion from a current position coordinate system to an initial position coordinate system of the scanning head; and
performing calculation based on the current second scanning measurement data, the second rotation matrix, and the second translation vector, so as to obtain the stitched scanning measurement data.

4. The method for scanning processing as claimed in any one of claims 1-3, wherein the converting the stitched scanning measurement data into second tracker scanning measurement data comprises:

acquiring a third rotation matrix and a third translation vector of the scanning head for conversion from the initial position coordinate system to the tracker coordinate system; and
performing calculation based on the stitched scanning measurement data, the third rotation matrix, and the third translation vector, so as to obtain the second tracker scanning measurement data.

5. The method for scanning processing as claimed in any one of claims 1-4, wherein the performing a switch to a stitched scanning mode in a case that the state information of the scanning head satisfies a preset mode switching condition comprises:
in response to determining that a tracker detects no scanning head based on the state information of the scanning head, performing the switch to the stitched scanning mode in a case of determining that the state information of the scanning head satisfies the preset mode switching condition.

6. The method for scanning processing as claimed in any one of claims 1-5, wherein the state information of the scanning head continues to be inspected in real time, and it is determined that the state information of the scanning head satisfies the preset data conversion condition as follows:
determining that the tracker detects the scanning head on the basis of continuing to inspect the state information of the scanning head in real time, and determining that the state information of the scanning head satisfies the preset data conversion condition.

7. The method for scanning processing as claimed in any one of claims 1-6, wherein before the target object is tracked and scanned, the method further comprises:

photographing a calibrator with a mark point or an encoded point at a plurality of positions and a plurality of postures through a binocular camera tracker, so as to obtain a plurality of first images, and calculating an internal parameter and an external parameter of the binocular camera tracker by selecting a corresponding binocular camera calibration method and the plurality of first images;
photographing the calibrator with the mark point or the encoded point at a plurality of positions through a scanning head camera, so as to obtain a plurality of second images, and calculating an internal parameter and an external parameter of the scanning head camera by selecting a corresponding camera calibration method and the plurality of second images;
calculating mathematical expressions of a plurality of laser line emitting surfaces under the scanning head coordinate system; and
calculating a rigid transformation relation between a scanning head external frame coordinate system and the scanning head coordinate system.

8. An apparatus for scanning processing, comprising:

a real-time inspection component configured to inspect state information of a scanning head in real time in a process of tracking and scanning a target object;

a first acquisition component configured to acquire first tracker scanning measurement data based on the scanning head;

a switching component configured to perform a switch to a stitched scanning mode in a case that the state information of the scanning head satisfies a preset mode switching condition;

a second acquisition component configured to acquire stitched scanning measurement data based on the scanning head in the stitched scanning mode; wherein

the real-time inspection component is further configured to continue to inspect state information of the scanning head in real time;

a conversion component configured to convert the stitched scanning measurement data into second tracker scanning measurement data in a case that the state information of the scanning head satisfies a preset data conversion condition; and

a processing component configured to obtain target tracker scanning measurement data of the target object based on the first tracker scanning measurement data and the second tracker scanning measurement data.

9. An electronic device, comprising:

a processor; and

a memory configured to store an instruction executable by the processor; wherein

the processor is configured to read the executable instruction from the memory, and execute the instruction, so as to implement the method for scanning processing as claimed in any one of claims 1-7.

10. A computer-readable storage medium, storing a computer program, wherein the computer program is configured to execute the method for scanning processing as claimed in any one of claims 1-7.

Fig. 1

| Inspect state information of a scanning head in real time in a process of tracking and scanning a target object, and acquire first tracker scanning measurement data based on the scanning head | S101 |

| Perform a switch to a stitched scanning mode in a case that the state information of the scanning head satisfies a preset mode switching condition, and acquire stitched scanning measurement data based on the scanning head in the stitched scanning mode | S102 |

| Continue to inspect state information of the scanning head in real time, and convert the stitched scanning measurement data into second tracker scanning measurement data in a case that the state information of the scanning head satisfies a preset data conversion condition | S103 |

| Obtain target tracker scanning measurement data of the target object based on the first tracker scanning measurement data and the second tracker scanning measurement data | S104 |

Fig. 2

Photograph a calibrator with a mark point or an encoded point at a plurality of positions and a plurality of postures through a binocular camera tracker, so as to obtain a plurality of first images, and calculate an internal parameter and an external parameter of the binocular camera tracker by selecting a corresponding binocular camera calibration method and the plurality of first images — S201

Photograph the calibrator with the mark point or the encoded point at a plurality of positions through a scanning head camera, so as to obtain a plurality of second images, and calculate an internal parameter and an external parameter of the scanning head camera by selecting a corresponding camera calibration method and the plurality of second images — S202

Calculate mathematical expressions of a plurality of laser line emitting surfaces under a scanning head coordinate system, and calculate a rigid transformation relation between a scanning head external frame coordinate system and the scanning head coordinate system — S203

Acquire current first scanning measurement data at a current position based on the scanning head, acquire a first rotation matrix and a first translation vector for conversion from the scanning head coordinate system to a tracker coordinate system, and perform calculation based on the current first scanning measurement data, the first rotation matrix, and the first translation vector, so as to obtain first tracker scanning measurement data — S204

Determine that a tracker detects no scanning head based on the state information of the scanning head, and perform a switch to a stitched scanning mode in a case of determining that the state information of the scanning head satisfies a preset mode switching condition — S205

Acquire current second scanning measurement data at the current position based on the scanning head, acquire a second rotation matrix and a second translation vector of the scanning head for conversion from a current position coordinate system to an initial position coordinate system of the scanning head, and perform calculation based on the current second scanning measurement data, the second rotation matrix, and the second translation vector, so as to obtain stitched scanning measurement data — S206

Determine that the tracker detects the scanning head on the basis of continuing to inspect state information of the scanning head in real time, and determine that the state information of the scanning head satisfies a preset data conversion condition — S207

Acquire a third rotation matrix and a third translation vector of the scanning head for conversion from the initial position coordinate system to the tracker coordinate system, and perform calculation based on the stitched scanning measurement data, the third rotation matrix, and the third translation vector, so as to obtain second tracker scanning measurement data — S208

Obtain target tracker scanning measurement data of a target object based on the first tracker scanning measurement data and the second tracker scanning measurement data — S209

Fig. 3

Real-time inspection
component301

First acquisition component302

Switching component303

Second acquisition
component304

Processing component306

Conversion component305

Fig. 4

400

Processing
apparatus 401

ROM 402

RAM 403

404

Input/output (I/O) interface 405

Input apparatus 406

Output
apparatus 407

Storage
apparatus 408

Communication
apparatus 409

## INTERNATIONAL SEARCH REPORT

| International application No. |
|---|
| **PCT/CN2023/133181** |

### A. CLASSIFICATION OF SUBJECT MATTER

G01B11/24(2006.01)i

According to International Patent Classification (IPC) or to both national classification and IPC

### B. FIELDS SEARCHED

Minimum documentation searched (classification system followed by classification symbols)

IPC:G01B

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; IEEE: 杭州先临天远三维检测技术有限公司, 跟踪, 扫描头, 扫描仪, 拼接, 模式, 切换, 转换, 三维, 平移向量, 旋转矩阵, 3D, track+, scanhead, scanner, mode, switch+, transition, three dimension

### C. DOCUMENTS CONSIDERED TO BE RELEVANT

| Category* | Citation of document, with indication, where appropriate, of the relevant passages | Relevant to claim No. |
|---|---|---|
| PX | CN 115979164 A (HANGZHOU TIANYUAN 3D DETECTION TECHNOLOGY CO., LTD.) 18 April 2023 (2023-04-18) <br> claims 1-10 | 1-10 |
| X | CN 111220076 A (WUHAN ZHONGGUANG AUTOMATION TECHNOLOGY CO., LTD.) 02 June 2020 (2020-06-02) <br> description, paragraphs [0004]-[0187], and figures 1-8 | 1-10 |
| A | CN 112964196 A (HANGZHOU SIRUIDI TECHNOLOGY CO., LTD.) 15 June 2021 (2021-06-15) <br> entire document | 1-10 |
| A | CN 113890955 A (TENYOUN 3D (TIANJIN) TECHNOLOGY CO., LTD.) 04 January 2022 (2022-01-04) <br> entire document | 1-10 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **21 February 2024** | **07 March 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2023/133181** |

| Patent document cited in search report | | | Publication date (day/month/year) | Patent family member(s) | Publication date (day/month/year) |
| --- | --- | --- | --- | --- | --- |
| CN | 115979164 | A | 18 April 2023 | None | |
| CN | 111220076 | A | 02 June 2020 | None | |
| CN | 112964196 | A | 15 June 2021 | None | |
| CN | 113890955 | A | 04 January 2022 | None | |

Form PCT/ISA/210 (patent family annex) (July 2022)

**EP 4 621 348 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211490005